# EUROPEAN PATENT SPECIFICATION

(11) **EP 1 513 302 B1**
(45) Date of publication and mention of the grant of the patent: **23.01.2008**
(21) Application number: 03020194.1
(22) Date of filing: 05.09.2003
(51) Int. Cl.: H04L 12/58

(54) **Real-time messaging in collaborative network environments**
Echtzeit-Nachrichtenaustausch in kooperativen Netzwerkumgebungen
Messagerie en temps réel dans des environnements de réseau collaboratifs

(43) Date of publication of application: 09.03.2005
(73) Proprietor: SAP AG, 69190 Walldorf (DE)
(72) Inventor: Hoppe-Boeken, Tobias, 65199 Wiesbaden (DE); Demirel, Kayhan, Mountain View CA 94040 (US)
(74) Representative: Röthinger, Rainer

(56) References cited:
- EP-A- 1 199 652
- WO-A-02/51079
- US-A1- 2003 041 178
- US-B1- 6 205 471
- US-B1- 2002 073 158

## Description

### Field of the Invention

The invention relates to real-time communication scenarios that involve computer networks. More specifically, the invention relates to real-time message transfer mechanisms for collaborative network environments such as electronic conferences, live chat forums and electronic online auctions.

### Background of the Invention

As a result of the ubiquity of computer networks, computers increasingly participate in complex, distributed communities of people and systems, rather than operating as solitary devices employed by a single person. This major shift in the way computers are used has led to computer systems that are able to act effectively as members of a collaborative network community.

Collaborative network communities include one or more data sources and one or more data recipients. One characteristic of collaborative network communities is the fact that at least some of the data sources usually also act as recipients of data and that at least some of the data recipients may also play the role of data sources. Collaborative network communities may persist over long periods of time, form spontaneously for a single group activity, or come together repeatedly.

In the past, collaborative tasks were usually performed in series. A typical example is collaborative file processing. A file is sent from a data source a data recipient. The data recipient changes the file and sends it to a further data recipient or back to the data source, which then acts as data recipient, and so on. In such conventional collaborative scenarios the transfer time of a file from one network component to another does not play a major role since it can be neglected compared with the time it took to create, change, process etc. the file.

Concurrently with the deployment of increasingly powerful computers and network infrastructure in recent years, collaborative network communities that require real-time information exchange have evolved. As examples for such real-time collaborative network communities various online applications like live chat forums, electronic conferences and electronic online auctions can be mentioned. It is evident that for such online applications the transfer time of information does matter since any transfer delay is perceived by a party waiting for specific information as wasted time.

Information exchange between the individual participants of a real-time collaborative network environment is very often controlled by a central network component having messaging capabilities. Such a central network component receives information from a data source, processes the information if required and creates corresponding messages that are sent to one or more data recipients. The messages sent to the recipients may include the information received from the data source, information derived therefrom or simply a specific notification. Messages may also be sent by the central network component upon an internal event, for example in order to notify the collaborative community about a new session or about technical problems.

Usually, messages are simply broadcast by the central network component to the collaborative community. The broadcast of messages has the advantage that no complex addressing tasks have to be performed, thus allowing a fast creation and transfer of messages. However, broadcasting approaches have the drawback that it is generally not possible to transfer information that is intended for a single recipient, like confidential or personal information. On the other hand, many approaches that enable such an individualized message transfer to single participants are accompanied by inherent processing delays that are associated with creating, addressing and sending individualized messages.

EP 1 199 652 A1 teaches an e-mail processing technique. The technique includes delivering an e-mail received from an e-mail server to a mail store controller from which it is then stored in a mail store memory, with possible attachments to the e-mail stored in another storage location. The attachments are then subjected to a processing operation. Finally, a server controller retrieves the message and attachments and delivers them to the mail store controller, which forwards them to the e-mail server for subsequent delivery to a recipient. US 2002/0073158 discloses an online anction system wherein notifications are sent to users on a contact list when they have been outbid by another user.

The object underlying the invention is thus to provide a real-time messaging approach for a collaborative network environment that allows for an individualized messaging and at the same time avoids or at least reduces delays associated with such an individualized messaging.

### Summary of the Invention

This object is solved by a real-time messaging method according to claim 1, a computer program product according to claim 14, and a real time messaging component according to claim 16.

According to one aspect of the invention a real-time messaging method is provided for collaborative communication scenarios in which messages relating to information received from one or more data sources are transferred to one or more message recipients that may themselves act as data sources. The method comprises queuing messages that are to be sent to the recipients and that include references to content data, reading messages from the message queue, requesting the content data referenced in the messages, and inserting the requested content data in the messages read from the message queue.

According to the method, the messages are read in response to a message retrieval request from a particular recipient and the messages for the recipient in the queue are consecutively numbered.

The use of a message queue principally allows for an individualized messaging. To cope with the inherent message transfer delays associated with the queuing of message, some or all of the queued messages may be content-less. This approach enables the implementation of a lean message queue which allows for a faster handling of the queued messages.

The content data may be stored centrally or in a dispersed manner. To this end at least one content data base may be provided from which the requested content data referenced in a queued message can be retrieved. The content data base may be a dedicated data base assigned to a messaging component or a shared data base that is jointly used by the messaging component and one or more further components. The one or more further components also using the shared content data base may include a collaborative application component. The collaborative application component may be programmed to control a collaborative session like at least one of an electronic auction, an electronic conference and an electronic chat environment. In the context of the present invention, the term "component" refers to software, hardware or a combination thereof.

Data received from the one or more data sources, or data derived therefrom, may be stored as content data in the one or more content data bases. Preferably, the one or more content data bases are assigned to and managed by the collaborative application component. In such a case the collaborative application component may be in charge of handling content data requests received e.g. via a dedicated interface from the messaging component.

The implementation of a lean message queue including messages that do not contain the content data as such but only references to content data allows for an efficient message handling. In particular, mechanisms may be provided for minimizing the time required for retrieving requested content data referenced in a queued message from the content data base. Such mechanisms may for example be optimized in dependence of the volume of content data to be retrieved. Such an approach is particularly advantageous in cases where the data volume to be inserted in the queued messages can largely vary, e.g. from a few kilobyte to many gigabyte.

The messages included in the message queue may be addressed to individual message recipients. The addressing of messages allows for the generation of messages that include or reference recipient-specific data. It is however also possible to alternatively or additionally include generic content data into addressed messages. Addressed messages may be sent to individual components participating in a collaborative session or according to a broadcast scheme to all participating components.

Different mechanisms for reading messages from the message queue may be implemented. Message transfer may be initiated upon internal or external events. The one or more messages queued for a particular message recipient may for example be read in response to an external event like receipt of a message retrieval request from the particular message recipient. The message recipients may be programmed to send message retrieval requests in regular time intervals or upon user interaction. Alternatively or additionally, message transfer in response to internal events (like a particular message retrieval scheme enforced e.g. by the messaging component) and independently from receipt of a message retrieval request from a participant of a collaborative session may be implemented.

The queued messages may include references to system data. System data referenced in a queued message may for example relate to a text that informs a message recipient in a standardized manner about a particular event such as the login or logout of an individual participant of a collaborative session. The system messages may be stored in a system message data base. The system message data base may be a dedicated data base of the messaging component.

The content data stored in the content data base may be managed in various ways. According to one exemplary approach the content data to be inserted in the queued messages are included in data objects. In this case the reference included in a queued message may relate to a particular data object or a part thereof. Different kinds of data objects (object classes) may be defined for a particular collaborative application depending on the typical information that has to be transferred in context with this application.

Individual recipients may be assigned to individual data objects and vice versa. This allows for example to determine all participants of a particular session like an electronic auction, conference or chat for which a data object has been defined. The assignment may also be used to generate messages for all recipients assigned to a particular data object upon an internal or external event relating to the particular data object.

The reference to content data included in the queued messages may have various formats. According to one example, the reference to content data includes a data object identifier. Data object identifiers may be uniquely assigned to the plurality of data objects in which referenced content data are stored. The data object identifier may thus for example relate to a particular session managed by the collaborative application component.

In addition or as an alternative to the data object identifier, the reference to content data may include message type information generically specifying the content data to be inserted in a queued message. The combination of data object identifier and message type information may be used to uniquely designate specific content data to be inserted in a message read from a message queue. While the data object identifier specifies the particular data object from which content data has to be read, the message type information defines which particular content data included in this data object are to be read from this data object. The message type information included in a queued message may thus generically specify particular content data that are to be requested or read from the data object referenced by the data object identifier of the queued message.

In order to detect and cope with the loss of messages, the messages created for an individual message recipient may be consecutively numbered and the respective message numbers may be included in the messages queued for the individual message recipient. Upon receipt of a message, each message recipient may thus compare the message number of the newly received message with the message number of the last message and determine if there are any messages missing. Such a numbering approach may also be used by data sources. This means that the data sources may consecutively number their transmissions and include the respective transmission numbers in their transmissions. This allows the messaging component to determine if transmissions were lost.

Furthermore, the message numbers may be used for the implementation of efficient update approaches. If the number of the last message that has been read from the message queue with the purpose of inserting content data has been stored, the next reading operation may be controlled such that only messages with message numbers higher than the stored message number are considered. Consequently, the message numbers may be used for implementing a so-called delta update approach, which strongly reduces the network traffic.

For various purposes, e.g. in order to send individual messages contained in a message queue more than once to a specific recipient (because of a message loss) or to enable a full refresh of a particular recipient, it is advantageous that the queued messages remain in the message queue after they have been read. Since a lean message queue is implemented, no memory problems have to be feared even if all messages remain in the message queue during the whole lifetime of a collaborative session. The messages inside a message queue may be deleted only after a particular collaborative session has ended.

The present invention may be implemented as software, as one or more pieces of hardware, or as a combination thereof. Hence, the invention also relates to a computer program product with program code portions for performing the individual steps of the invention when the computer program product is run on one or more components of a computer network. The computer program product may be stored on a computer readable recording medium.

According to a further aspect of the invention, a real-time messaging component is provided for collaborative communication scenarios in which messages relating to information received from one or more data sources are transferred to one or more message recipients that may themselves act as data sources. The real-time messaging component comprises access to at least one content data base in which content data are stored, and a message queue for queuing messages that are to be sent to the one or more recipients. The queued messages include references to content data in the content data base and consecutive message numbers. The real-time messaging component further comprises a message builder for reading messages contained in the message queue, for requesting the content data referenced in the messages, and for inserting the requested content data in the messages read from the message queue.

The message component further includes an interface for receiving a first message and a component for newly creating one or more second messages in response to receipt of the first message and a message builder for reading the second messages from the message queue upon receipt of a message retrieval request.

The real-time messaging component may be provided with a plurality of dedicated interfaces for different communication tasks occurring in context with the particular collaborative application for which messaging is performed. A messaging interface may be provided for the task of receiving message retrieval requests from the message recipients. Additionally or alternatively, one or more login and logout interfaces for receiving and sending login or logout information may be used. Furthermore, the real-time messaging component may include a data interface for receiving data like bids or chat messages from the data sources.

The task of routing received information or information to be sent via the appropriate interface may be controlled by a messaging server. The messaging server may be configured as an intermediate component arranged between the messaging component on the one hand and the network components acting as data sources/message recipients on the other hand.

The real-time messaging component may include one or more dedicated data bases including the content data base mentioned above. Additionally or alternatively, a client registration data base for storing assignments between individual data recipients and individual content data or data objects including the content data may be provided.

According to a still further aspect, the invention relates to a messaging network comprising a collaborative application component including the content data base and the messaging component described above. The messaging component may have an interface to the collaborative application component for requesting and receiving content data. Preferably, the application component is configured as an online transactional processing (OLTP) component.

In addition to the collaborative application component and the messaging component, the messaging network may further comprise a collaborative environment including distributed network components communicating with each other via the messaging components.

### Brief Description of the Drawings

Further details, embodiments, modifications and enhancements of the present invention may be obtained from consideration of the following description of various illustrative embodiments of the invention in conjunction with the drawings, in which:
- Fig. 1: is a schematic diagram illustrating an exemplary technical realization of a collaborative network environment including a real-time messaging component in accordance with the present invention;
- Fig. 2: is a schematic diagram illustrating a hardware-oriented view of a multitiered server configuration of the real-time messaging network in accordance with the present invention;
- Fig. 3: is a schematic diagram illustrating a software-oriented functional view of a login procedure involving the messaging component of the present invention;
- Fig. 4: is a schematic diagram illustrating the data base structure of a central network component of the present invention including the real-time messaging component and an application component;
- Fig. 5: is a schematic diagram illustrating a software-oriented functional view of a submit bid procedure involving the messaging component of the present invention;
- Fig. 6: is a schematic diagram illustrating a software-oriented functional view of a message retrieval procedure performed by the messaging component of the present invention;
- Fig. 7: is a schematic diagram illustrating a software-oriented functional view of a logout procedure involving the messaging component of the present invention;
- Fig. 8: is a schematic diagram illustrating a graphical user interface of a network component of a first type communicating with the messaging component of the present invention; and
- Fig. 9: is a schematic diagram illustrating a graphical user interface of a network component of a second type communicating with the messaging component of the present invention.

### Detailed Description of Preferred Embodiments

Where appropriate, the same reference numbers will be used throughout this detailed description in conjunction with the drawings to refer to the same or like parts.

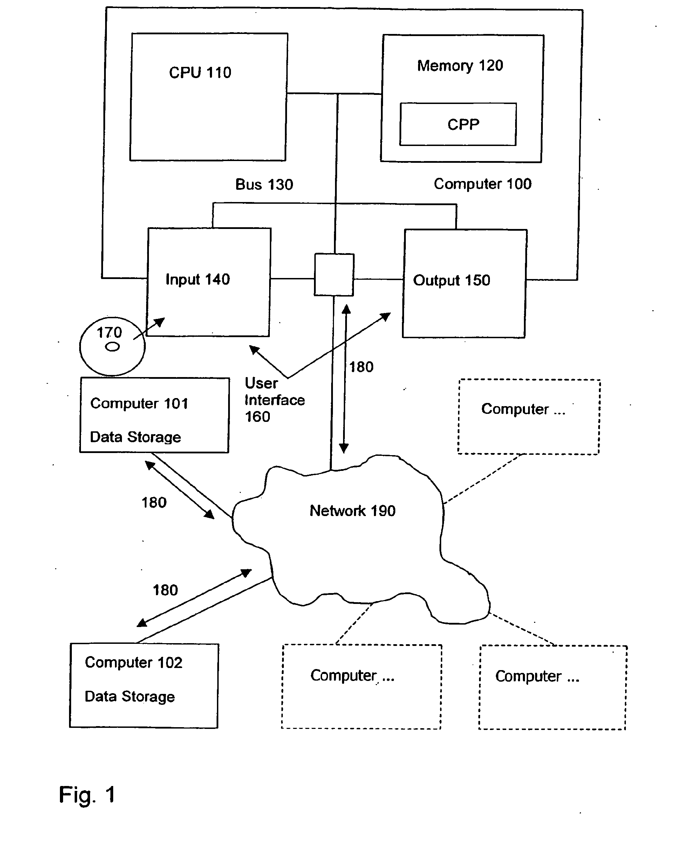

Fig. 1 illustrates a simplified block diagram of a collaborative network environment according to the present invention including a real-time messaging and application component 100 and a plurality of further network components 101, 102, etc. that act as participants of a collaborative network community. The network components 100, 101, 102, etc. are coupled via a network 190 and may be realized, for example, as clients, servers, routers, peer devices or any other common network devices.

Each network component 100, 101, 102, etc. comprises a processor 110, a memory 120, a bus 130, and, optionally, one or more input devices 140 and output devices 150 (I/O devices) acting as user interface 160, interoperating in a conventionally known manner. The present invention may be embodied in a computer program product (hereinafter CPP) residing on a program carrier 170 and/or in the memory 120, and generating program signals 180, collectively called a "program".

The network components 101, 102, etc. typically may comprise many or all of the elements described with respect to the network component 100. Hence, the elements 110 to 180 in the network component 100 collectively illustrate also corresponding elements in the other network components 101, 102, etc. of the network 190.

Although the memory 120 is conveniently illustrated as a part of the network component 100, a memory function can also be implemented as an independent node in the network 190, in the other components of the network, in the processor 110 itself (e.g., cache, register), or elsewhere. Portions of the memory 120 can be removable or non-removable with respect to a particular network component. The memory 120 can store software program support modules such as, for example, a basic input output system (BIOS), an operating system (OS), a program library, a compiler, an interpreter, communication programs, drivers, protocol converters, application software programs, (Internet-) Browsers, or data base applications. Although the CPP is illustrated as being stored in memory 120, the CPP can also be located elsewhere. For example, the CPP can also be embodied on the program carrier 170.

The CPP comprises program instructions and - optionally - data or variables that cause processor 110 to execute the steps forming the methodology of the present invention. The method steps are explained in greater detail below. The CPP defines and controls the operation of the network component 100 and its interaction in the network system 190. For example, and without the intention to be limiting, the CPP can be available as source code in any programming language, and as object code ("binary code") in a compiled presentation. Persons of ordinary skill in the art can use the CPP in connection with any of the above mentioned support modules. The functionalities of one or more of the network components 100, 101, 102, etc. and of the CPP are closely related. Phrases, such as "the computer provides" or "the program provides", are used hereinafter to express actions by one or more network nodes that is/are controlled by the CPP in accordance with the invention.

The program carrier 170 is illustrated as being outside the network component 100. For communicating the CPP to the network component 100, the program carrier 170 is conveniently inserted into the input device 140. The carrier 170 is implemented as any computer readable medium. Generally, the program carrier 170 is an article of manufacture comprising a computer readable medium having computer readable program code means embodied therein for executing the method of the present invention. Further, the program signals 180 can also embody the CPP. The signals 180 travel on the computer network 190 to and from the network component 100. The steps of the computer program product CPP can be executed solely in the network component 100, in which case the computer network 190 may be omitted, or can be executed in a distributed manner in one or more of the components of the computer network 190.

The bus 130 and the computer network 190 provide logical and physical connections by conveying instructions and data signals. While connections and communications inside the network component 100 are conveniently handled by the bus 130, connections and communications between different network components are handled by the network 190. Optionally, the network 190 comprises gateways and routers being computers that are dedicatedly programmed to effect data transmission and protocol conversion. The input/output devices 140 and 150 are coupled to the network component 100 by the bus 130 (as illustrated) or by the network 190 (optional). While the signals inside the network component 100 can be mostly electrical signals, the signals in the network can be electrical, magnetic, optical or wireless (radio) signals.

The network 190 can include one or more of an office-wide computer network, an enterprise-wide computer network, an intranet or the Internet (i.e. world wide web). The world wide web (www) represents all of the computers on the Internet that offer users access to information on the Internet via interactive documents or Web pages. Web information resides on Web servers on the Internet or within company or community networks (intranets). Network 190 can include a wired or a wireless network, such as, for example, a local area network (LAN), a wide area network (WAN), a wireless LAN (WLAN), a public switched telephone network (PSTN), an integrated services digital network (ISDN), an infra-red (IR) or Bluetooth link, a radio link e.g. according to the Universal Mobile Telecommunications System (UMTS), the Global System for Mobile Communication (GSM), a Code Division Multiple Access (CDMA) system, or satellite link.

Transmission protocols, mechanisms and data formats to effect communications between network components which are connected to and by the network 190 are known, for example, as transmission control protocol/internet protocol (TCP/IP), hyper text transfer protocol (HTTP), secure HTTP, wireless application protocol (wap), unique resource locator (URL), unique resource identifier (URI), hyper text markup language HTML, extensible markup language (XML), extensible hyper text markup language (XHTML), wireless application markup language (WML), electronic data interchange (EDI), which is an electronic exchange of business information between or inside organizations and their information technology (IT) infrastructure in a structured format, remote function call (RFC), or via an application programming interface (API), etc.

Interfaces coupled between individual elements and components are also well known in the art. For simplicity, interfaces are not illustrated. An interface can be, for example, a serial port interface, a parallel port interface, a game port, a universal serial bus (USB) interface, an internal or external modem, a video adapter, or a sound card.

The CPP according to the present invention can be part of a complex software system embedded in a hardware structure. The cooperation of the software system and the hardware structure is sometimes referred to as IT backbone system. The backbone system can have a layered structure with individual software components acting in accordance with the client/server concept as service providers, service requesters, or both. For example an application software can include software components that provide services for presentation, acting as a server. But at the same time the application software also can act as service requester of data base services provided by a lower layer. The layered components can communicate with each other via predefined (hardware and software) interfaces.

As regards a possible implementation of a layered software structure, a lower layer may include network-related functionalities, a physical data base and an operating system for the network components. A middle layer that interfaces with the lower layer integrates software applications in the upper layer above it. This middle layer may include components like software tools, system administration tools, data handling tools, authorization and security management tools, cross-application modules, and a system kernel. The system kernel can use communications and application program interfaces to access components like application software in the upper layer or the operating system, the data base, and the network in the lower layer. This system kernel can operate independently from the applications and is located "under" the application software and the data layers of the software system. The upper layer contains the different software applications for controlling and monitoring processes relating for example to the management of human resources, sales and distribution, financials, materials, manufacturing, electronic procurement etc.

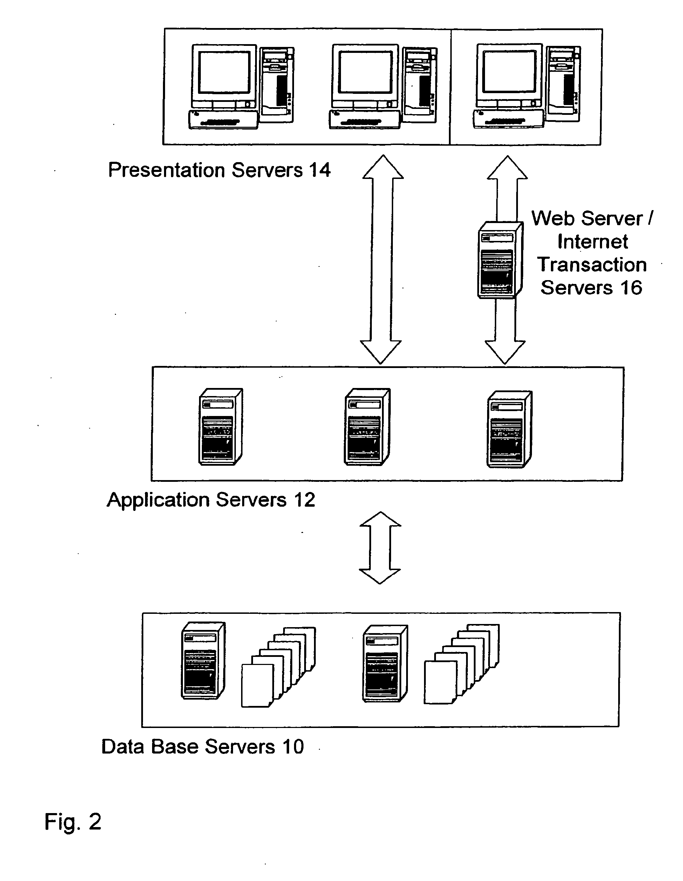

One possible client/server configuration in which the present invention can be carried out is a so-called multi-tiered network architecture which separates a network system's components into separate functional groups like presentation, communication, application, and data base. This is illustrated in Fig. 2 in a hardware-related view. As can be seen from Fig. 2, the multi-tiered architecture comprises one or more data base servers 10, one or more application servers 12 and one or more presentation servers 14. Communication among the tiers can be accomplished using for example the standard protocol services mentioned above, such as the ones provided by TCT/IP or CPIC. CPIC stands for Common Programming Interface Communication and includes standard functions and services for program-to-program communication.

With the multi-tiered architecture shown in Fig. 2, each hardware group can be set up to support demands of its functions. The one or more data base servers 10 include the data sources. Application servers 12 interfacing the data base servers 10 include the main processing logic as regards messaging and the particular collaborative application that is to be performed. The tasks related to data presentation are handled by presentation servers 14, which can typically be personal computers or work stations. External presentation servers 14 may be connected to the application servers 12 via the Internet and Web servers/Internet transaction servers 16. The external as well as internal presentation servers 14 are participants of a collaborative session controlled by the collaborative application running on the application servers 12. In the present case the presentation servers 14 may function as data sources, message recipients or both.

In the following, an embodiment of the invention will be described with reference to a collaborative application in the form of an online electronic auction. Of course, the principles of the present invention can also be practiced in conjunction with other collaborative applications like electronic conferencing, online electronic chatting, and the like.

Online (or live) electronic auctions are used to create a real-time environment that includes a presentation server operated by a seller (conventional auction) or a purchaser (reverse auction) on the one hand and a plurality of presentation servers operated by the individual bidders on the other hand. Such collaborative network communities persist over a certain, usually predefined period of time. Often, a plurality of individual auctions (also referred to as sessions) are performed simultaneously. Accordingly, each participant may concurrently participate in two or more sessions.

From the point of view of a presentation server operated by a bidder, a session starts with session login and ends with session logout. During session login and session logout, data relating for example to bids or chat messages are submitted and associated messages like bid confirmations or bidding information about bids submitted by other bidders are received.

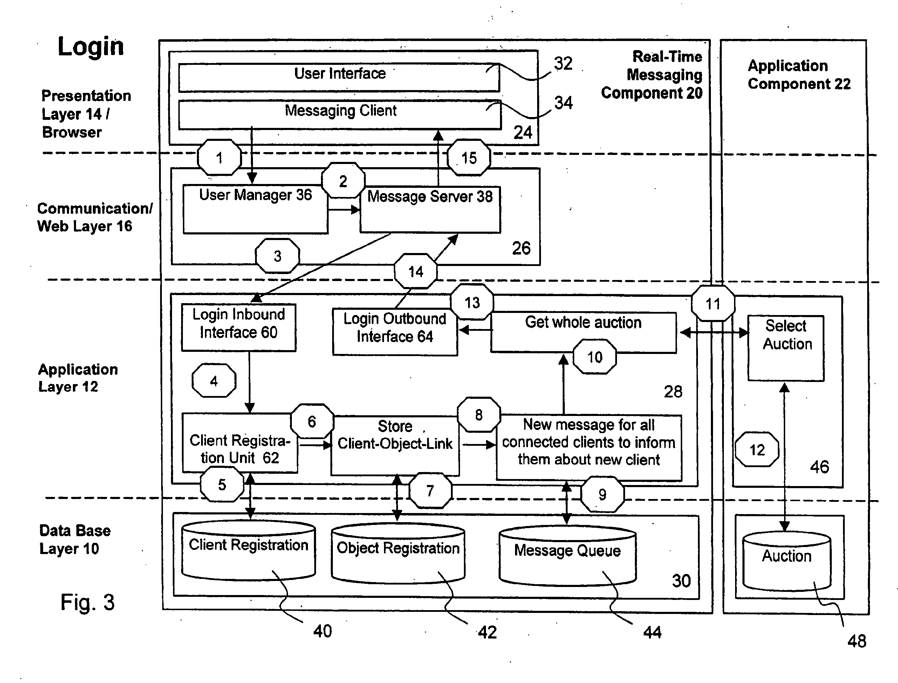

An exemplary multi-tiered network architecture for controlling message transfer in an online electronic auction is shown in Fig. 3 in a software-related view. As becomes apparent from Fig. 3, the multi-tiered network architecture comprises four different layers and two individual software components spanning the different layers and running to a large extent independently from one another. The different layers include a data base (or persistence) layer 10 as bottom layer, an application layer 12 interfacing the data base layer 10, a communication/Web layer 16 on top of the application layer 12, and a presentation layer (or a browser) 14 as top layer on the communication/Web layer 16. Of course, the invention could also be practiced with fewer or more software layers. For example, the data base layer 10 and the application layer 12 may be combined into a single layer.

As regards the individual software components, the present embodiment includes a real-time messaging component 20 as well as a collaborative application component 22. The real-time messaging component 20 spans the data base layer 10, the application layer 12, the communication/Web layer 16 and the presentation layer 14 while the application component 22 in the present embodiment only spans the data base layer 10 and the application layer 12. Although in the present embodiment the real-time messaging component 20 and the application component 22 are described as two individual components interfacing each other, they may also be combined into a single component.

The real-time messaging component 20 includes a plurality of sub-components running on different servers of the collaborative network environment. More specifically, the real-time messaging component 20 includes a plurality of presentation sub-components 24 running on distributed presentation servers, a communication sub-component 26 running on a Web server/Internet transaction server, an application sub-component 28 running on an application server as well as a data base sub-component 30 running on one or more of data base servers. From the point of view of the real-time messaging component 20, the distributed presentation sub-components 24 act as clients that are served by the application sub-component 28. Hence, the presentation sub-components 24 will in the following also be referred to as clients and the application sub-component 28 will also be referred to as server.

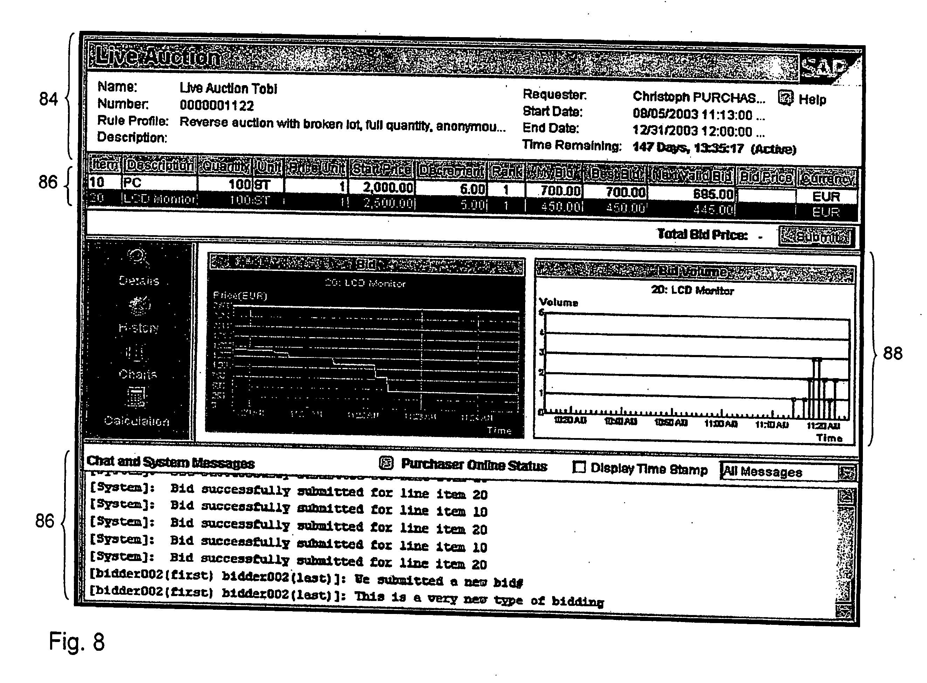

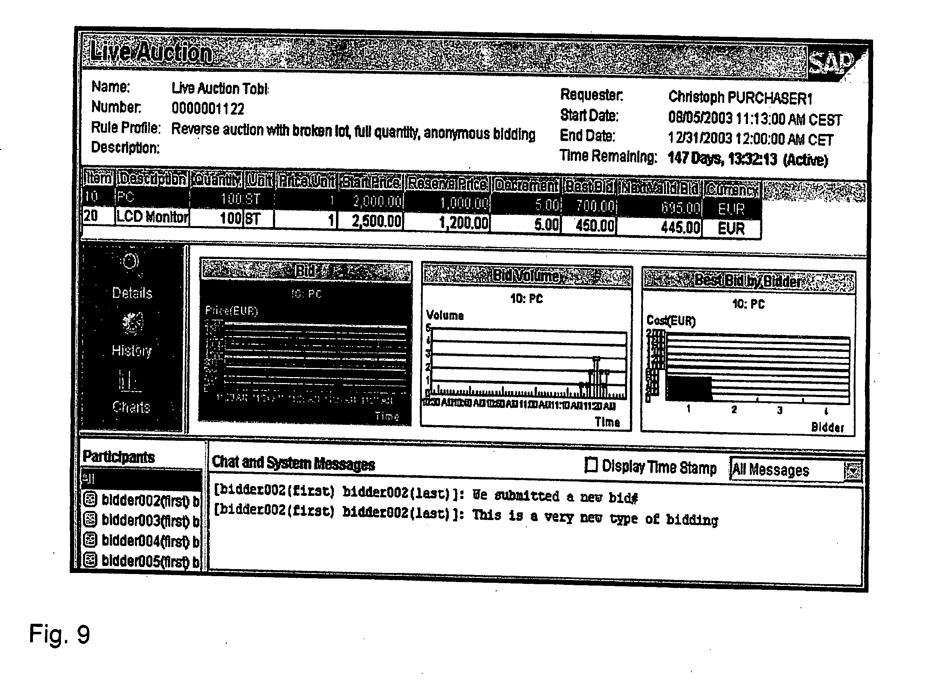

The various presentation sub-components 24 each include a user interface 32 that will be described in more detail below with reference to Figs. 8 and 9 as well as a messaging client 34. The messaging client 34 enables the distributed computers operated by the purchaser/seller and the bidders to submit data in the form of new bids or chat messages to the application component 22 and to retrieve messages from the messaging component 20. The messaging client 34 may for example be configured as a Java Applet and may be mapped to a user and his role as bidder or purchaser/seller.

The communication sub-component 26 of the real-time messaging component 20 includes a user manager 36 for authenticating the user and for enforcing a single sign-on strategy as well as a message server 38. The main task of the message server 38 is to call the appropriate backend interface of the application sub-component 28 in the application layer 12. The various functionalities of the application sub-component 28 will be described in more detail below.

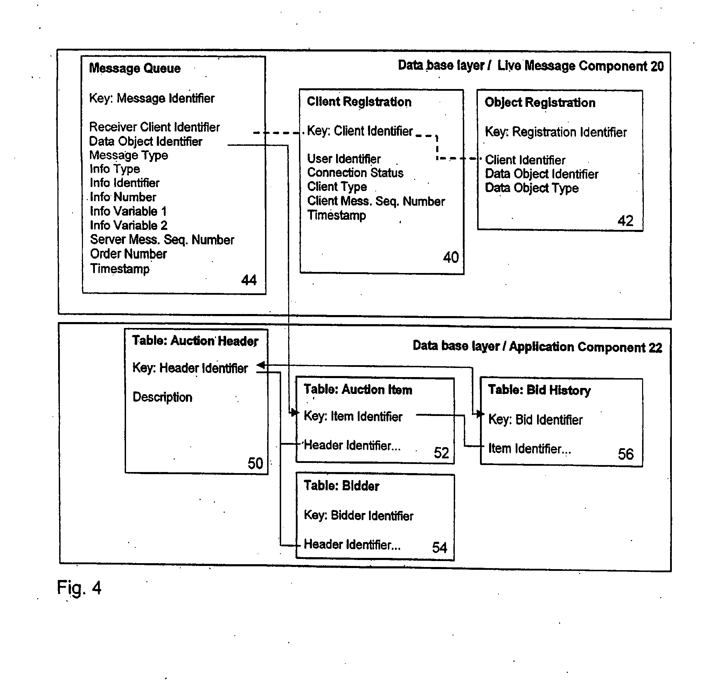

The data base sub-component 30 of the messaging component 20 includes one or more data bases relating to the tasks of client registration, data object registration and message queuing. In the present embodiment, the date base sub-component 30 includes three main data base tables 40, 42, 44 that are related to one another as shown in the upper half of Fig. 4. Particularly, a client registration table 40, a data object registration table 42 and a message queuing table 44 are provided.

The client registration table 40 has a key field that relates to a client identifier. The client identifier is a unique identifier assigned to a particular client while the client is logged in. Each client can be mapped to a particular user and a user identifier received from the client during login. The client registration table 40 further contains data fields relating to the connection status of an individual client, the client type (for example bidder, purchaser or seller), a client message sequence number (e.g. 1 for the first message received from the client) as well as a time stamp.

The data object registration table 42 has a key field that relates to a registration identifier. The registration identifier is a consecutively assigned number indicating a single assignment between a particular client and a particular data object. In the present embodiment, a data object-oriented approach for storing content data relating to a particular session (e.g. auction) is pursued. Different types (or classes) of data objects may be defined for a particular session. In the auctioning context, individual data object types are defined for auctions, bid histories and chat messages.

The data object registration table 42 is used to store the individual relationships between clients (client identifier) and data objects like auctions (one client can subscribe to one or more auctions). One data object registration is performed for each auction a client is assigned to.

The message queue table 44 has a key field that relates to a unique message identifier. Additionally, for each queued message the receiver client identifier is stored for addressing purposes. The message queue table 44 further includes for each queued message a reference to content data to be inserted in a particular message read from the message queue prior to message transfer. This means that in contrast to conventional message systems, the message contents are not stored inside the message queue. The queued messages stored in the message queue may thus be considered as "content-less". Instead, a reference to a particular data object (data object identifier) as well as message type information specifying which informational part of the identified data object is to be included in the particular message are stored for each queued message. The message queue table 44 includes a plurality of further data fields that will be explained below in conjunction with writing information in the message queue table and reading queued messages.

As has become apparent from the above, the messages are not stored inside the message queue in the form of a long string or an XML document. Instead, a lean message queue is used in which the queued messages include a link to content data included in a particular data object or a part thereof. Such a lean message queue has huge performance advantages, especially when the volume of content data to be inserted in the queued messages strongly varies. A data object can be structured into many tables (header, item, text, attachments, etc.) and can hence include one to many thousand or million data lines, data fields or line items. Accordingly, the size of one single message can typically vary from 1 kilobyte to many gigabyte. The message queue must in principle be able to handle the smallest as well as the biggest possible data object size. Such size variations lead to handling problems if the whole message is queued. By implementing a lean message queue that only stores a reference to content data, message handling becomes up to 200 times faster compared with conventional message queues. This performance gain is particularly advantageous in context with collaborative real-time applications such as electronic online auctions.

At the same time, and in contrast to simple broadcast mechanisms, the message queue allows for a comparatively easy implementation of client addressing mechanisms. Hence, client specific messages, i.e. messages with a client-specific content, can easily be managed. This allows to attach to every system message a corresponding client-specific message. If for example a client submits a new bid for a particular auction, it receives a system message with the updated price and rank information (that is also transmitted to the other clients participating in the electronic online auction) and additionally receives a client-specific message acknowledging receipt of the new bid.

Having described the data base sub-component 30 of the messaging component 20, reference is now made to the application component 22 shown in Fig. 3. As becomes apparent from Fig. 3, the application component 22 in the present embodiment spans the application layer 12 and data base layer 10. The application component 22 includes a sub-component 44 on the application layer 12 which basically includes the auction related business logic as well as a content data base 48 which belongs to the data base layer 10.

The structure of the content data base 48 is shown in the lower half of Fig. 4 in more detail. As can be seen, the content data base 48 is configured as a relational data base including a plurality of associated tables. Specifically, the content data base 48 includes an auction header table 50, an auction item table 52, a bidder table 54 as well as a bid history table 56. The content data base 48 serves for storing data objects derived from data object classes like auction, bid history, chat, etc.

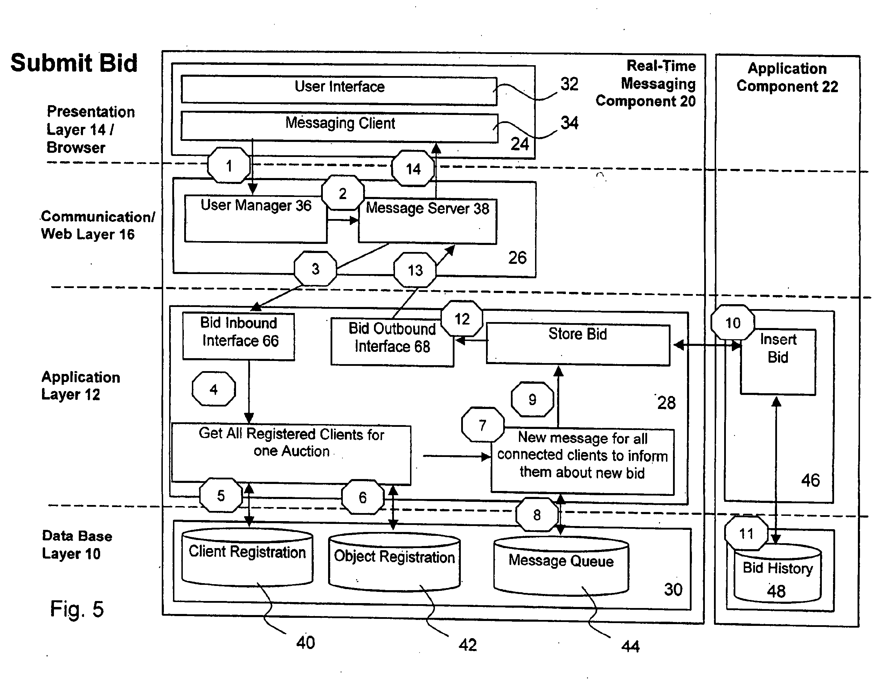

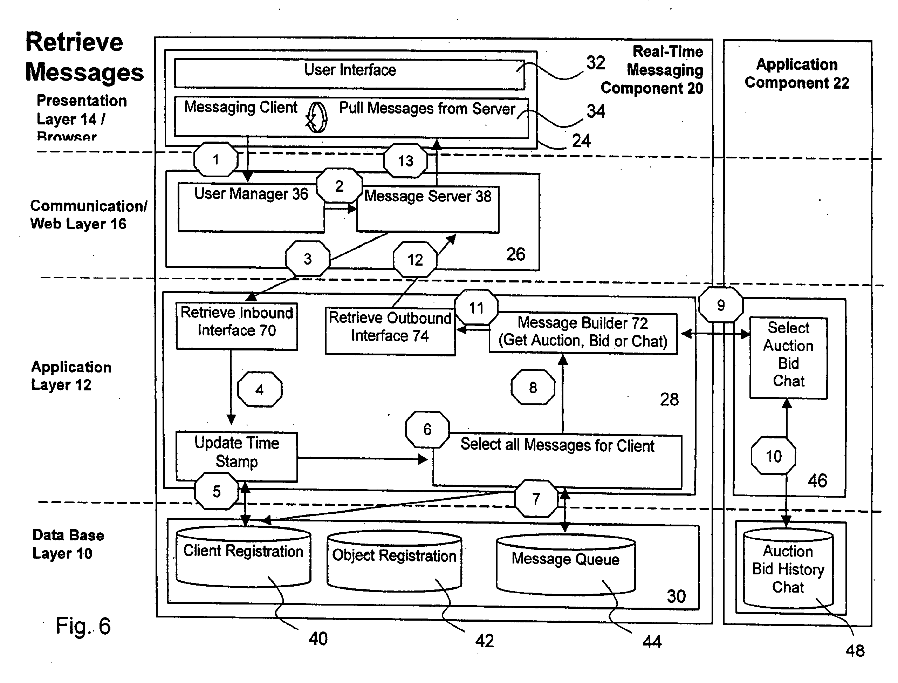

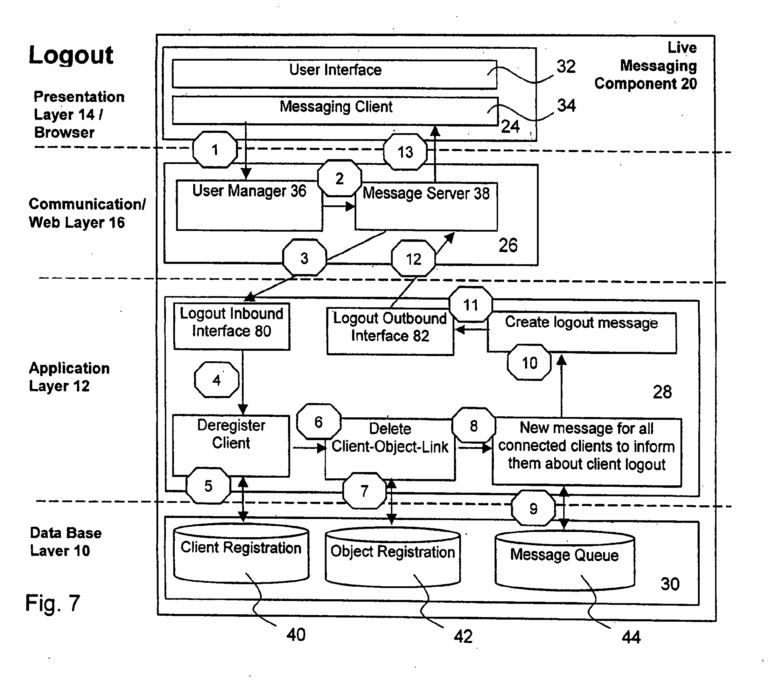

In the following, several messaging scenarios and the entities of the messaging component 20 involved therein will exemplarily be described. The messaging scenarios relate to login messaging (Fig. 3), to the receipt of new client messages (Fig. 5), to the retrieval of queued messages (Fig. 6) and to logout messaging (Fig. 7).

Reference is now made to Fig. 3, which illustrates a login procedure. During login, a user gets authenticated, a new client identifier is created and the newly created client identifier is persisted in the client registration table 40. Then, specific auction data is selected and a corresponding message including the auction data is directly (i.e. without using the message queue) sent to the client.

The login procedure starts with a universal resource locator (URL) that includes a particular auction identifier and possibly a user identifier. From this information the messaging client 34 constructs a login message comprising the user identifier, the auction identifier characteristic of the auction to which login is requested, a time stamp and a client message sequence number. The client message sequence number is a consecutively assigned number included in the message that is sent from the messaging client 34. Since the login message is the first message, it receives the client message sequence number 1.

In step 1 the login message constructed by the messaging client 34 is sent via the HyperText Transfer Protocol (HTTP) to the communication sub-component 26. The user manager 36 authenticates the user and ensures that single sign-on is working. If the user is valid, the login message is passed on to the message server 38 (step 2).

The message server 38 identifies the message content (login message) and calls the appropriate backend interface of the application sub-component 28. In the present case, this is the login inbound interface 60 (step 3).

From the login inbound interface 60 the login message is routed to a client registration unit 62 (step 4). The client registration unit 62 assigns a unique client identifier to the client. This client identifier remains assigned until the particular client logs out again.

In step 5 the newly assigned client identifier, the user identifier included in the login message, the client type determined by the client registration unit 62 (for example bidder or purchaser), the client message sequence number (1 for the login message) and the time stamp contained in the login message are persisted in data base table 40, i.e. in the client registration table described above in conjunction with Fig. 4.

In step 6 the link between the particular client requesting login and the data object (like a particular reverse auction) for which login is requested gets validated. Then, the relationship between a client, a particular data object identifier (e.g. a unique number) and the data object type (auction) gets persisted in the data object registration table 42 (step 7). Additionally, all currently logged in clients (client identifiers) for the particular auction are selected using the corresponding assignment information included in the data object registration table 42.

In step 8 a message is created for every client that is logged in. The message that is created is a generic and standardized system message notifying all currently participating clients that a new client is online. Consequently, the number of newly generated messages equals the number of clients that were assigned to the particular auction prior to the login of the new client. For each message a new message identifier is created and associated with the individual receiving client identifiers determined in step 7.

For each newly created message the remaining data fields of the message queue table 44 shown in Fig. 4 are filled as follows. The data object identifier is set to the auction identifier. The message type is set to "login message", the info type is set to "auction", the info identifier is set to "information message", the info number refers to an internationalized text with the content "X joined auction Y", the info variables 1 and 2 are set to X and Y. Additionally, a server message sequence number of the last message to a particular message recipient is determined, increased by 1 and stored in the appropriate data field, the order number remains initial (because only one message is stored) and the time stamp is set to the current data base server time. In step 9 the newly created messages are stored in the message queue table.

The entries of the columns info type, info identifier, info number, etc. included in the message queue table can be considered as references to system data stored in a separate system message data base (not shown) of the data base sub-layer 30. Whereas the content data are thus stored and managed by the application component 22, the system data are stored and managed by the messaging component 20.

In step 10 the application sub-component 28 requests specific content data (auction data) from the application component 22 by calling an appropriate interface in the application layer 12. In step 11 the request is transferred to the application component and in step 12 the requested data are gathered, i.e. selected out of the individual data base tables associated with the particular data object (auction).

In step 13 the auction data gets forwarded to a login outbound interface 64. The login outbound interface 64 repackages the auction data and sends it to the message server 38 in the communication/Web layer 16 (step 14). The message server 38 again repackages the data and sends a corresponding message to the client who requested login. There, the whole auction data is finally displayed on a graphical user interface as will be explained with reference to Fig. 8.

In the following, the procedure of submitting new messages will be explained with reference to Fig. 5. A new message can be created by the client (for example a new bid or chat message) or inside the messaging server (for example a message indicating that an auction status has been changed). If a new message is received from the client, the data contained therein is used to update the content data base 48, and more specifically the corresponding data base tables. For example a new bid is stored in the bid history table, while a chat message is stored in a chat history table.

The messaging component determines all clients that are online and subscribed to the corresponding data object (for example auction or chat) and stores a reference like a bid identifier and the receiving client identifier for the one or more clients to be notified thereof in the message queue table 44. As has already been indicated above, for every message type a unique interface is provided. For receipt of a submit bid message and a submit chat message for example two different interfaces are used and two different data base tables are updated.

In the following, the submission of a message containing data relating to a new bid will be described with reference to Fig. 5.

Steps 1 and 2 are identical with the steps described above in context with the login message. In step 3 the message server 38 identifies the newly received message as a submit bid message and calls a bid inbound interface 66 of the application sub-component 28. In steps 4 and 5 the client identifier is validated against its data base record and the time stamp in the client registration table gets updated. In step 6 all clients that are currently logged in for the particular auction are selected.

In step 7 the bid gets validated using a specific business logic. If the bid gets rejected, the submitting client immediately gets a bid rejection message. Otherwise, the submitting client gets a bid acceptance message. In this case all clients determined in step 6 are informed about the newly submitted valid bid. This means that corresponding messages for these clients are created and stored in the message queue table in step 8. The data field "data object identification" of the message queue table is set to the new bid in the bid history table if the newly submitted bid is valid.

In step 9 an interface is called to store the new bid in the content data base 46 of the application component 22. In step 10 the corresponding tables for the newly submitted bids are set and the newly submitted bid is sent to the data base layer 10. The newly submitted bid then gets stored in the bid history table 56 (see Fig. 4) of the content data base 46 (step 11).

In parallel with calling the interface for storing the newly submitted bid in the content data base 46 (step 9), inside a bid outbound interface 68 a retrieve message logic is called (step 12) in order to inform the client that has submitted the bid whether the newly submitted bid has been accepted or rejected. It should be noted that whereas messages informing the clients participating in a particular auction about the newly submitted bid are queued in the message queue, the messages informing the particular client that has submitted the bid about acceptance or rejection of the bid are directly sent to this client, i.e. are not inserted in the message queue.

In a next step 13 the bid outbound interface 68 calls the message server 38. The message server 38 repackages the received data and sends it in step 14 to the particular client that submitted the bid. The client then displays the bid accepted or bid rejected message as system message on its graphical user interface as shown in the lower portion 90 of Fig. 8 ("bid successfully submitted for a line item ...").

Whereas in the present embodiment the bid accepted and bid rejected messages are thus sent to the client in accordance with a so-called push scheme, the messages that are queued in the message queue may be retrieved by the clients in accordance with a so-called pull mechanism. Of course, the bid accepted and bid rejected messages could also be included in the message queue and retrieved by a pull mechanism. The retrieval of messages from the message queue upon receipt of a corresponding message retrieval request from a client will now be explained with reference to Fig. 6.

The individual clients are configured to pull the queued messages in regular time intervals from the messaging queue (e.g. every 1 to 20 seconds). To this end, a client calls a dedicated interface to get all new messages inside the queue that contain his client identifier. As has been explained above, the queued messages do not contain the message content itself but only a reference to a particular object and message type. After selecting all messages for a particular client out of the message queue table, a further step is thus required to read the referenced data object, e.g. auction, bid or chat. The size of the data object can vary strongly. Auctions for example can contain many hundred line items while bids are usually rather small. Consequently, a mechanism is provided inside the application component 22 to optimize the time required to select and read a data object from the content data base 48 in dependence on the data volume to be retrieved.

As shown in Fig. 6, the messaging client 34 sends in regular time intervals (or upon a specific user request) message retrieval requests via the communication/Web layer 16 to the application sub-component 28. To this end the messaging client creates a message retrieval request including the user and client identifier as well as the last server message sequence number included in the last message received. The message retrieval request is sent to the user manager 36 (step 1), which authenticates the user inside the communication layer 16. In the case of successful authentication the message retrieval request is forwarded to the message server 38 in step 2. In step 3 the message server 38 calls a retrieve inbound interface 70. Then, the time stamp for the calling client gets updated and the new time stamp gets persisted (steps 4 and 5).

In steps 6 and 7 the message retrieval request is evaluated and all messages for the requesting client that have a server message sequence number higher than the server message sequence number included in the message retrieval request are read from the message queue. The messages that have been read from the message queue remain in the message queue until the auction has ended. In step 7 the new server message sequence number in the client registration table 40 is set.

The use of the server message sequence number has two advantages. First, it enables implementation of a so-called data update approach. This means that not all messages included for the requesting client in the message queue are transferred to the client but only those messages that have a server message sequence number higher than the server message sequence number included in the message retrieval request. Second, it is ensured that if any messages were lost on the way to the client the lost messages would be sent in response to the next message retrieval request.

The selected messages are transferred in step 8 to a message builder 72 that builds the messages on the basis of the information included in the "raw" messages read from the message queue. Because the message content is not included inside the messages stored in the queue, but inside data objects in the content data base 46, the message builder 72 calls an interface to retrieve the content data referenced in the queued messages from the content data base 46. Retrieval of content data from the content data base 46 involves both the data object identifier and the message type included in a particular "raw" message as has been explained above.

If in addition or as an alternative to the content data the messages read from the message queue include system data, i.e. if the data fields info type, info identifier, info number, etc. are filled for a queued message, the message builder 72 retrieves the referenced system data from the system message data base (not shown) in the data base sub-layer 30. The system messages are stored in different languages and the reference to a system message included in a queued message points at the system message in the appropriate language that has previously been chosen in the user settings of a particular client. Corresponding language information may be send from the client to the messaging component 20 with each message or during the login procedure.

In step 9 the application component 22 is called to get the auction, bid history or chat entry or parts thereof (for example only one line item) corresponding to the referenced content data. The appropriate content data are selected in step 10 and received from the appropriate tables of the content data base 46.

The message builder 72 completes the one or more messages from the message queue with the requested content and/or system data and calls a retrieve outbound interface 74 (step 11). The retrieve outbound interface 74 repackages the received data and sends it in step 12 to the message server 38. The message server 38 repackages the data and forwards it over HTTP to the requesting client in step 13. The client then updates its user interface with the newly received data. For example if only one line item has changed since the last message retrieval request, only this line item gets updated.

If a client wants (or has to) leave an auction, a logout procedure as shown in Fig. 7 is initiated. The logout procedure involves a dedicated logout interface that can be called by user interaction from the client or by a separate process that gets started after a predefined time out period. During the logout procedure, all rows for the logged out client get deleted in the client registration table 40, in the data object registration table 42 and in the message queue table 44 shown in Fig. 4. Additionally, all other clients currently registered for the same data object e.g. an auction or a chat session, get a new message inside the message queue to ensure that they are informed that one client has gone offline.

The individual steps of the logout procedure are shown in Fig. 7. The procedure starts with the creation of a logout message by the messaging client 34. The logout message includes the user, auction and client identifier. In step 1 the messaging client 34 sends the logout message to the user manager 36, which validates the user. The logout message then gets forwarded to the message server 38 in step 2, which calls a logout inbound interface 80 and forwards the logout message to the logout inbound interface 80 in step 3. The client then gets deregistered and a client specific row is deleted in the client registration data base 40 (steps 4 and 5). Moreover, the client-data object assignment gets deleted and the corresponding rows in the data object registration table 42 are deleted (steps 6 and 7).

In step 7 all other clients assigned to particular data object are determined and the corresponding information is used to create new messages for every still connected client regarding the fact that one of the clients has logged out (steps 8 and 9). In step 10 a new message is created for the client that requested logout which confirms successful logout. The message is sent in step 11 to a logout outbound interface 82 and is routed via the message server 38 to the client that requested logout (steps 12 and 13). The session for the client has ended.

Fig. 8 shows the graphical user interface of a bidding client. As becomes apparent from Fig. 8, the graphical user interface includes a first portion 84 for presenting general information about a particular auction like the auction name, the auction identifier (also called auction number), the auction profile etc. In a further portion 86 the individual line items of the particular auction are presented. In the embodiment depicted in Fig. 8 the auction consists of two line items. For each of the two line items, individual data fields like "Rank", "My Bid", "Best Bid" etc. regularly get updated on the basis of information contained in messages retrieved from the message queue for the particular client. Also updated are the two graphical charts shown in portion 88 of the graphical user interface. In the lower portion 90 of the graphical user interface, chat and system messages retrieved from the message queue or received via a push mechanism are displayed. The system messages for example relate to confirmations that individual bids for individual line items have successfully been submitted. Additionally, the present embodiment allows to submit and receive chat messages between the participating clients.

Fig. 9 shows the graphical user interface of a client associated with a purchaser. The graphical interface of the purchaser is to a large extent identical with the graphical user interface of the bidder explained in context with Fig. 9. Hence, a detailed description thereof is omitted.

As has become apparent from the above description of a preferred embodiment, the real-time messaging approach according to the present invention ensures a reliable, secure and fast messaging environment. This is mainly achieved because of the decoupling of data objects and messages. A further advantage of the invention is the fact that the messages relating for example to new bids, chat etc. are persisted in a data base and more specifically in the data base table titled "message queue". This approach, in combination with the security mechanism of server and client message sequence numbers, reliably ensures that lost messages simply get sent during the next messaging cycle. A further advantage of the client and server message sequence numbers is the fact that delta messages for changes can be generated, so that generally no full refresh is required. Dedicated interfaces inside the application sub-component 28 allow to avoid unnecessary read operations and to decouple the client implementation. Furthermore, the dedicated interfaces allow for a connection pooling between the communication layer 16 and the application layer 12. The multiple layer architecture assures a high scalability of the network environment because the communication layer 16 as well as the application layer 12 can be deployed on many physical servers.

## Claims

1. A method of creating messages for a collaborative communication session with real-time messaging in which messages relating to data received from one or more data sources (101, 102...) are transferred to one or more message recipients (101, 102...) that may themselves act as data sources, the method comprising:
- receiving a first message from one of the data sources (101, 102...);
- in response to receipt of the first message, newly creating one or more second messages that are to be sent to the one or more message recipients (101, 102...)
**characterized by**
- queuing the one or more second messages, wherein the one or more queued second messages include references to content data;
- reading the one or more second messages from the message queue;
- requesting the content data referenced in the one or more second messages; and
- inserting the requested content data in the one or more second messages read from the message queue, wherein the one or more second messages queued for a particular message recipient (101, 102 ...) are read in response to receipt of a message retrieval request from the particular recipient (101, 102...) and wherein the one or more second messages created for the particular message recipient (101, 102 ...) are consecutively numbered and the respective message numbers are included in the second messages queued for the particular message recipient (101, 102...).

2. The method of claim 1, wherein the message retrieval request from the particular message recipient (101, 102, ...) includes the message number of the last message received by the particular message recipient (101, 102, ...).

3. The method of claim 2, wherein the one or more second messages queued for the particular message recipient (101, 102, ...) having a message number higher than the message number included in the message retrieval request are read from the message queue.

4. The method of one of claims 1 to 3, wherein
the content data are requested from at least one content data base (48) that is managed by a collaborative application component (22) programmed to control the collaborative communication session.

5. The method of one of claims 1 to 4, further comprising
storing the data received from the one or more data sources (101, 102 ...) as content data.

6. The method of one of claims 1 to 5, further comprising:
optimizing the retrieval of the requested content data in dependence of the data volume to be retrieved.

7. The method of one of claims 1 to 6, wherein
the queued second messages are addressed to individual message recipients (101, 102 ...).

8. The method of one of claims 1 to 7 wherein
the queued second messages further include references to system data, wherein the system data include a standardized information text.

9. The method of one of claims 1 to 8, wherein
the content data are included in data objects and wherein the references to content data relate to particular data objects or parts thereof.

10. The method of claim 9, further comprising
assigning individual recipients (101, 102 ...) to individual data objects.

11. The method claim 10, wherein
the reference to content data includes a data object identifier.

12. The method of one of claims 1 to 11, wherein
the reference to content data includes message type information generically specifying the content data to be inserted in a second message read from the message queue.

13. The method of one of claims 1 to 12, wherein
the steps are performed in an electronic auctioning, electronic conferencing or electronic chatting context.

14. A computer program product comprising program code portions for performing the steps of one of claims 1 to 13 when the computer program product is run on a computer.

15. The computer program product of claim 14, stored on a computer readable recording medium.

16. A real-time messaging component (100) for collaborative communication sessions in which messages relating to data received from one or more data sources (101, 102 ...) are transferred to one or more message recipients (101, 102 ...) that may themselves act as data sources, the messaging component comprising:
- at least one interface for receiving a first message;
- access to at least one content data base (46) in which content data are stored;
- a component for newly creating one or more second messages for one or more message recipients in response to receipt of the first message;
**characterised by**
- a message queue means (44) for queuing the one or more second messages that are to be sent to the one or more message recipients (101, 102 ...), wherein the one or more queued second messages include references to content data in the content data base (48) and consecutive message numbers; and
- a message builder (72) for reading the one or more second messages from the message queue upon receipt of a message retrieval request from a particular message recipient, for requesting the content data referenced in the second messages and for inserting the requested content data in the second messages read from the message queue.

17. The messaging component of claim 16, further comprising a messaging client (34) for sending the message retrieval request from the particular message recipient, wherein the message retrieval request includes the message number of the last message received by the particular message recipient.

18. The messaging component of claim 16 or 17, wherein the message builder (72) is configured to read the one or more second messages from the message queue having a message number higher than the message number included in the message retrieval request.

19. The messaging component of one of claims 16 to 18, further comprising a plurality of dedicated interfaces, each interface being dedicated to a particular communication task.

20. The messaging component of claim 19, further comprising
a message server (38) for routing received information or information to be sent via the interface dedicated to the particular communication task.

21. The messaging component of one of claims 16 to 20, further comprising the content data base (48).

22. A real-time messaging network (100, 101, 102, 190), comprising:
- a collaborative application component (22) including a content data base (48); and
- the messaging component (100) of one of claims 16 to 21 including an interface to the collaborative application (22) component for requesting and receiving content data.

## Patentansprüche

1. Verfahren zum Erzeugen von Nachrichten für eine gemeinschaftliche Kommunikationssitzung mit Echtzeit-Nachrichtenaustausch, bei der Nachrichten, die in Beziehung zu Daten stehen, welche von einer oder von mehreren Datenquellen (101, 102,...) empfangen werden, an einen oder mehrere Nachrichtenempfänger (101, 102,...) übertragen werden, die selber als Datenquellen agieren können, das Verfahren umfassend:
- Empfangen einer ersten Nachricht von einer der Datenquellen (101, 102,...);
- als Antwort auf den Erhalt der ersten Nachricht, Neuerzeugen einer oder mehrerer zweiter Nachrichten, die an den einen oder die mehreren Nachrichtenempfänger (101, 102,...) gesendet werden sollen,
**gekennzeichnet durch**
- Einreihen der einen oder der mehreren zweiten Nachrichten in eine Warteschlange, wobei die eingereihten eine oder mehreren zweiten Nachrichten Verweise auf Inhaltsdaten umfassen;
- Auslesen der einen oder der mehreren zweiten Nachrichten aus der Nachrichtenwarteschlange;
- Anfordern der Inhaltsdaten, auf die in der einen oder den mehreren zweiten Nachrichten verwiesen wird; und
- Einfügen der angeforderten Inhaltsdaten in die eine oder die mehreren zweiten Nachrichten, die aus der Nachrichtenwarteschlange ausgelesen wurden, wobei die eine oder die mehreren zweiten Nachrichten, die für einen spezifischen Nachrichtenempfänger (101, 102,...) in der Warteschlange eingereiht sind, als Antwort auf den Erhalt einer Nachrichtenabfrageanforderung von dem spezifischen Empfänger (101, 102,...) ausgelesen werden und wobei die eine oder die mehreren zweiten Nachrichten, die für den spezifischen Nachrichtenempfänger (101, 102,...) erzeugt worden sind, fortlaufend nummeriert werden und die entsprechenden Nachrichtennummern in die für den spezifischen Nachrichtenempfänger (101, 102,...) in die Warteschlange eingereihten zweiten Nachrichten enthalten sind.

2. Verfahren nach Anspruch 1, bei dem die Nachrichtenabfrageanforderung von dem spezifischen Nachrichtenempfänger (101, 102,...) die Nachrichtennummer der letzten Nachricht umfasst, die von dem spezifischen Nachrichtenempfänger (101, 102,...) empfangen wurde.

3. Verfahren nach Anspruch 2, bei dem die einen oder die mehreren zweiten Nachrichten, die für den spezifischen Nachrichtenempfänger (101, 102,...) in der Warteschlange eingereiht sind und eine Nachrichtennummer aufweisen, die höher als die in der Nachrichtenabfrage enthaltene Nachrichtennummer ist, aus der Nachrichtenwarteschlange ausgelesen werden.

4. Verfahren nach einem der Ansprüche 1 bis 3, bei dem die Inhaltsdaten von mindestens einer Inhaltsdatenbank (48) angefordert werden, die von einer gemeinschaftlichen Applikationskomponente (22) verwaltet wird, welche zur Steuerung der gemeinschaftlichen Kommunikationssitzung programmiert ist.

5. Verfahren nach einem der Ansprüche 1 bis 4, ferner umfassend Speichern der Daten, die von der einen oder den mehreren Datenquellen (101, 102,...) erhalten wurden, als Inhaltsdaten.

6. Verfahren nach einem der Ansprüche 1 bis 5, ferner umfassend Optimieren der Abfrage der angeforderten Inhaltsdaten in Abhängigkeit von dem abzufragenden Datenvolumen.

7. Verfahren nach einem der Ansprüche 1 bis 6, bei dem die in die Warteschlange eingereihten zweiten Nachrichten an einzelne Nachrichtenempfänger (101, 102,...) adressiert sind.

8. Verfahren nach einem der Ansprüche 1 bis 7, bei dem die in die Warteschlange eingereihten zweiten Nachrichten ferner Verweise auf Systemdaten umfassen, wobei die Systemdaten einen standardisierten Informationstext enthalten.

9. Verfahren nach einem der Ansprüche 1 bis 8, bei dem die Inhaltsdaten in Datenobjekten enthalten sind, wobei die Verweise auf die Inhaltsdaten in Beziehung zu spezifischen Datenobjekten oder Teilen davon stehen.

10. Verfahren nach Anspruch 9, bei dem ferner einzelne Empfänger (101, 102,...) einzelnen Datenobjekten zugewiesen werden.

11. Verfahren nach Anspruch 10, bei dem der Verweis auf Inhaltsdaten einen Datenobjekt-Identifizierer umfasst.

12. Verfahren nach einem der Ansprüche 1 bis 11, bei dem der Verweis auf Inhaltsdaten Nachrichtentyp-Informationen umfasst, die generisch die Inhaltsdaten spezifizieren, die in eine aus der Nachrichtenwarteschlange ausgelesene zweite Nachricht einzufügen sind.

13. Verfahren nach einem der Ansprüche 1 bis 12, bei dem die Schritte bei einer elektronischen Versteigerung, einer elektronischen Konferenz oder einem elektronischen Nachrichtenaustausch durchgeführt werden.

14. Computerprogrammprodukt umfassend Programmcodeabschnitte zum Ausführen der Schritte nach einem der Ansprüche 1 bis 13, wenn das Computerprogrammprodukt auf einem Computer ausgeführt wird.

15. Computerprogrammprodukt nach Anspruch 14, das auf einem computerlesbaren Speichermedium gespeichert ist.

16. Echtzeit-Nachrichtenaustauschkomponente (100) für gemeinschaftliche Kommunikationssitzungen, bei denen Nachrichten, die in Beziehung zu Daten stehen, die von einer oder von mehreren Datenquellen (101,102,...) empfangen werden, an einen oder mehrere Nachrichtenempfänger (101, 102,...) übertragen werden, die selber als Datenquellen agieren können, wobei die Nachrichtenaustauschkomponente umfasst:
- mindestens eine Schnittstelle zum Empfangen einer ersten Nachricht;
- einen Zugang zu mindestens einer Inhaltsdatenbank (46), in der Inhaltsdaten abgespeichert sind;
- eine Komponente zum Neuerzeugen von einer oder von mehreren zweiten Nachrichten für einen oder für mehrere Nachrichtenempfänger als Antwort auf den Erhalt der ersten Nachricht;
**gekennzeichnet durch**
- eine Nachrichtenwarteschlangeeinrichtung (44) zum Einreihen der einen oder der mehreren zweiten Nachrichten, die an den einen oder die mehreren Nachrichtenempfänger (101, 102,...) gesendet werden sollen, in eine Warteschlange, wobei die eine oder die mehreren zweiten Nachrichten, die in der Warteschlange eingereiht sind, Verweise auf Inhaltsdaten in der Inhaltsdatenbank (48) und fortlaufende Nachrichtennummern umfassen; und
- einen Nachrichtenzusammensetzer (72) zum Auslesen der einen oder der mehreren zweiten Nachrichten aus der Nachrichtenwarteschlange nach Erhalt einer Nachrichtenabfrageanforderung von einem spezifischen Nachrichtenempfänger, zum Anfordern der Inhaltsdaten, auf die in der einen oder den mehreren zweiten Nachrichten verwiesen wird, und zum Einfügen der angeforderten Inhaltsdaten in die aus der Nachrichtenwarteschlange ausgelesenen zweiten Nachrichten.

17. Nachrichtenaustauschkomponente nach Anspruch 16, ferner umfassend einen Nachrichtenaustauschclient (34) zum Senden der Nachrichtenabfrageanforderung durch den spezifischen Nachrichtenempfänger, wobei die Nachrichtenabfrageanforderung die Nachrichtennummer der letzten, von dem spezifischen Nachrichtenempfänger erhaltenen Nachricht umfasst.

18. Nachrichtenaustauschkomponente nach Anspruch 16 oder 17, wobei der Nachrichtenzusammensetzer (72) dafür ausgebildet ist, die eine oder die mehreren zweiten Nachrichten aus der Nachrichtenwarteschlange auszulesen, die eine Nachrichtennummer aufweisen, die höher ist als die in der Nachrichtenabfrage enthaltene Nachrichtennummer.

19. Nachrichtenaustauschkomponente nach einem der Ansprüche 16 bis 18, ferner umfassend eine Vielzahl fest zugeordneter Schnittstellen, wobei jede Schnittstelle einer spezifischen Kommunikationsaufgabe fest zugeordnet ist.

20. Nachrichtenaustauschkomponente nach Anspruch 19, ferner umfassend einen Nachrichtenserver (38) zum Routen erhaltener oder auszusendender Informationen über die Schnittstelle, die der spezifischen Kommunikationsaufgabe fest zugeordnet ist.

21. Nachrichtenaustauschkomponente nach einem der Ansprüche 16 bis 20, ferner umfassend die Inhaltsdatenbank (48).

22. Echtzeit-Nachrichtenaustauschnetzwerk (100, 101, 102, 190) umfassend:
- eine gemeinschaftliche Applikationskomponente (22), die eine Inhaltsdatenbank (48) enthält; und
- die Nachrichtenaustauschkomponente (100) nach einem der Ansprüche 16 bis 21, die eine Schnittstelle zu der gemeinschaftlichen Applikationskomponente (22) zum Anfordern und Empfangen von Inhaltsdaten umfasst.

## Revendications

1. Procédé de création de messages pour une session de communication collaborative avec une messagerie en temps réel dans lequel les messages concernant des données reçues d'une ou plusieurs sources de données (101, 102...) sont transférés à un ou plusieurs destinataires du message (101, 102...) qui peuvent eux-mêmes agir comme des sources de données, le procédé comprenant :
- la réception d'un premier message de l'une des sources de données (101, 102...) ;
- en réponse à la réception du premier message, la nouvelle création d'un ou plusieurs deuxièmes messages qui doivent être envoyés à l'un ou aux plusieurs destinataires du message (101, 102...),
**caractérisé par**
- la mise en file d'attente de l'un ou des plusieurs deuxièmes messages, dans lequel l'un ou les plusieurs deuxièmes messages mis en file d'attente comprennent des références aux données de contenu ;
- la lecture de l'un ou des plusieurs deuxièmes messages à partir de la file d'attente de messages ;
- la demande des données de contenu référencées dans l'un ou les plusieurs deuxièmes messages ; et
- l'insertion des données de contenu demandées dans l'un ou les plusieurs deuxièmes messages lus à partir de la file d'attente de messages, dans lequel l'un ou les plusieurs deuxièmes messages mis en file d'attente pour un destinataire de message particulier (101, 102...) sont lus en réponse à la réception d'une demande de récupération de message provenant du destinataire particulier (101, 102...), et dans lequel l'un ou les plusieurs deuxièmes messages créés pour le destinataire de message particulier (101, 102...) sont numérotés consécutivement et les numéros des messages respectifs sont compris dans les deuxièmes messages mis en file d'attente pour le destinataire de message particulier (101, 102...).

2. Procédé selon la revendication 1, dans lequel la demande de récupération de message provenant du destinataire de message particulier (101, 102...) comprend le numéro de message du dernier message reçu par le destinataire de message particulier (101,102...).

3. Procédé selon la revendication 2, dans lequel l'un ou les plusieurs deuxièmes messages mis en file d'attente pour le destinataire de message particulier (101, 102...) ayant un numéro de message supérieur au numéro du message compris dans la demande de récupération de message sont lus à partir de la file d'attente de messages.

4. Procédé selon l'une quelconque des revendications 1 à 3, dans lequel les données de contenu sont demandées à partir d'au moins une base de données de contenu (48) qui est gérée par un composant d'application collaboratif (22) programmé pour contrôler la session de communication collaborative.

5. Procédé selon l'une quelconque des revendications 1 à 4, comprenant en outre le stockage des données reçues de l'une ou des plusieurs sources de données (101, 102...) comme des données de contenu.

6. Procédé selon l'une quelconque des revendications 1 à 5, comprenant en outre l'optimisation de la récupération des données de contenu demandées en fonction du volume des données à récupérer.

7. Procédé selon l'une quelconque des revendications 1 à 6, dans lequel les deuxièmes messages mis en file d'attente sont adressés à des destinataires de message individuels (101, 102...).

8. Procédé selon l'une quelconque des revendications 1 à 7, dans lequel les deuxièmes messages mis en file d'attente comprennent en outre des références aux données du système, dans lequel les données du système comprennent un texte d'informations standardisé.

9. Procédé selon l'une quelconque des revendications 1 à 8, dans lequel les données de contenu sont comprises dans des objets de données, et dans lequel les références aux données de contenu concernent des objets de données particuliers ou une partie de ceux-ci.

10. Procédé selon la revendication 9, comprenant en outre l'attribution de destinataires individuels (101, 102...) aux objets de données individuels.

11. Procédé selon la revendication 10, dans lequel la référence aux données de contenu comprend un identifiant d'objet de données.

12. Procédé selon l'une quelconque des revendications 1 à 11, dans lequel la référence aux données de contenu comprend des informations de type de message spécifiant génériquement les données de contenu devant être insérées dans un deuxième message lu à partir de la file d'attente de messages.

13. Procédé selon l'une quelconque des revendications 1 à 12, dans lequel les étapes sont réalisées dans un contexte de mise aux enchères électronique, de conférence électronique ou de bavardage en ligne électronique.

14. Produit de programme informatique comprenant des parties de code de programme pour réaliser les étapes selon l'une quelconque des revendications 1 à 13 lorsque le produit de programme informatique est exécuté sur un ordinateur.

15. Produit de programme informatique selon la revendication 14, stocké sur un support d'enregistrement lisible par ordinateur.

16. Composant de messagerie en temps réel (100) pour des sessions de communication collaboratives dans lesquelles les messages concernant les données reçues d'une ou plusieurs sources de données (101, 102...) sont transférés à un ou plusieurs destinataires du message (101, 102...) qui peuvent eux-mêmes agir comme des sources de données, le composant de messagerie comprenant :
- au moins une interface pour recevoir un premier message ;
- un accès à au moins une base de données de contenu (46) dans laquelle les données de contenu sont stockées ;
- un composant pour la nouvelle création d'un ou plusieurs deuxièmes messages pour un ou plusieurs destinataires du message en réponse à la réception du premier message ; **caractérisé par**
- un moyen de file d'attente de messages (44) pour mettre en file d'attente l'un ou les plusieurs deuxièmes messages qui doivent être envoyés à l'un ou aux plusieurs destinataires du message (101, 102...), dans lequel l'un ou les plusieurs deuxièmes messages mis en file d'attente comprennent des références aux données de contenu dans la base de données de contenu (48) et des numéros de message consécutifs ; et
- un constructeur de message (72) pour lire l'un ou les plusieurs deuxièmes messages à partir de la file d'attente de messages lors de la réception d'une demande de récupération de message provenant d'un destinataire de message particulier, pour demander les données de contenu référencées dans les deuxièmes messages et pour insérer les données de contenu demandées dans les deuxièmes messages lus à partir de la file d'attente de messages.

17. Composant de messagerie selon la revendication 16, comprenant en outre un client de messagerie (34) pour envoyer la demande de récupération de message provenant du destinataire de message particulier, dans lequel la demande de récupération de message comprend le numéro de message du dernier message reçu par le destinataire de message particulier.

18. Composant de messagerie selon la revendication 16 ou 17, dans lequel le constructeur de message (72) est configuré pour lire l'un ou les plusieurs deuxièmes messages à partir de la file d'attente de messages ayant un numéro de message supérieur au numéro de message compris dans la demande de récupération de message.

19. Composant de messagerie selon l'une quelconque des revendications 16 à 18, comprenant en outre une pluralité d'interfaces dédiées, chaque interface étant dédiée à une tâche de communication particulière.

20. Composant de messagerie selon la revendication 19, comprenant en outre un serveur de messagerie (38) pour acheminer les informations reçues ou les informations devant être envoyées via l'interface dédiée à la tâche de communication particulière.

21. Composant de messagerie selon l'une quelconque des revendications 16 à 20, comprenant en outre la base de données de contenu (48).

22. Réseau de messagerie en temps réel (100, 101, 102, 190), comprenant :
- un composant d'application collaboratif (22) comprenant une base de données de contenu (48) ; et
- le composant de messagerie (100) selon l'une quelconque des revendications 16 à 21 comprenant une interface au composant d'application collaboratif (22) pour demander et recevoir des données de contenu.
